## Europäisches Patentamt

## European Patent Office

## Office européen des brevets

(19)

(11) Numéro de publication: **0 117 168**
**B1**

(12)

# FASCICULE DE BREVET EUROPEEN

(45) Date de publication du fascicule du brevet:
**07.01.88**

(51) Int. Cl.⁴: **G 21 C 5/08**

(21) Numéro de dépôt: **84400055.4**

(22) Date de dépôt: **12.01.84**

(54) **Dispositif de cloisonnement du coeur d'un réacteur nucléaire à eau sous pression.**

(30) Priorité: **12.01.83 FR 8300396**

(43) Date de publication de la demande:
**29.08.84 Bulletin 84/35**

(45) Mention de la délivrance du brevet:
**07.01.88 Bulletin 88/1**

(84) Etats contractants désignés:
**AT BE CH DE GB IT LI SE**

(56) Documents cités:
**EP - A - 0 039 288**
**EP - A - 0 059 130**
**FR - A - 2 333 325**
**US - A - 3 124 514**
**US - A - 3 260 650**
**US - A - 3 629 070**

(73) Titulaire: **FRAMATOME, Tour Fiat 1 place de la Coupole,
F-92400 Courbevoie (FR)**

(72) Inventeur: **Alibran, Patrice, 62 rue Amelot, F-75011 Paris
(FR)**
Inventeur: **Millot, Jean-Paul, 1 allée des Roitelets,
F-78340 Elancourt (FR)**
Inventeur: **Desfontaines, Guy, 18 rue Jean Jaurès,
F-92800 Puteaux (FR)**

(74) Mandataire: **Fort, Jacques, CABINET
PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

L'invention concerne un dispositif de cloisonnement du cœur d'un réacteur nucléaire à eau sous pression.

Dans les réacteurs nucléaires à eau sous pression, le cœur est généralement constitué par des assemblages prismatiques disposés verticalement et côte à côte. La surface extérieure du cœur présente une forme complexe présentant de nombreux redans.

Autour du cœur, à l'intérieur de la cuve du réacteur nucléaire, est disposée une enveloppe de cœur constituée par une virole cylindrique à axe vertical. Entre la surface externe du cœur et la surface interne de l'enveloppe de cœur subsiste une zone annulaire d'épaisseur variable. Pour asurer le maintien latéral du cœur du réacteur et pour canaliser la plus grande partie du débit de l'eau de refroidissement dans le cœur lui-même, on dispose dans cette zone annulaire un cloisonnement constitué par des éléments assemblés entre eux dont certains peuvent être fixés sur l'enveloppe de cœur.

Ce cloisonnement est généralement constitué par des plaques métalliques assemblées entre elles par vissage, les unes disposées horizontalement sur toute la largeur de l'espace annulaire, et les autres disposées verticalement, en contact avec la surface externe du cœur.

Les plaques horizontales appelées conformateurs sont en contact par leur bord externe avec la surface interne de l'enveloppe de cœur et par leur bord interne avec la surface externe du cœur. Ces conformateurs sont disposés à différents niveaux suivant la hauteur du cœur.

Les conformateurs peuvent être fixés sur l'enveloppe de cœur par des vis engagées dans un alésage horizontal traversant l'enveloppe de cœur et en appui sur l'enveloppe de cœur par leur tête, la conformateur comportant un alésage dans le prolongement de l'alésage de l'enveloppe de cœur, partiellement taraudé, pour le vissage de la partie filetée de la vis.

La température de l'eau de refroidissement du réacteur est plus élevée à l'intérieur du cœur qu'à l'extérieur de l'enveloppe de cœur puisque cette eau s'échauffe au contact des assemblages dans lesquels elle circule de bas en haut puis revient, après son refroidissement dans les générateurs de vapeur, à la base du cœur, par la zone périphérique de la cuve autour de l'enveloppe du cœur. L'enveloppe de cœur est donc en contact par sa surface externe avec une eau de refroidissement à une température inférieure à la température de l'eau à l'intérieur du cœur et plus particulièrement de l'eau à la partie supérieure du cœur.

Les conformateurs qui sont en contact à la fois avec l'enveloppe de cœur et avec les plaques verticales constituant l'écran en contact avec la surface externe du cœur subissent donc des gradients thermiques importants. De plus, les conformateurs qui sont soumis au rayonnement émis par le cœur subissent un échauffement dans leur masse. Il en est de même des vis de fixation. Il faut donc éviter tout espace confiné entre les vis et leur logement, qui pourrait conduire à vaporiser l'eau contenue dans cet espace confiné et à l'apparition de caléfaction et de corrosion sur la vis.

Il est donc nécessaire de refroidir les vis de fixation des conformateurs et surtout d'homogénéiser leur température.

On a proposé, par exemple dans le brevet français 2 333 325, d'établir une circulation d'eau de refroidissement du réacteur autour de la vis. Pour cela, on prévoit des dimensions d'alésage suffisantes pour ménager un espace de circulation d'eau autour de la vis dans le conformateur et l'on prévoit des trous d'entrée et de sortie d'eau dans le conformateur communiquant avec l'alésage de la vis.

Suivant une variante de réalisation, on utilise une vis comportant un perçage axial sur une partie de sa longueur communiquant, par un perçage latéral, avec l'espace ménagé autour de la vis dans l'alésage du conformateur. Ainsi une circulation d'eau peut s'établir par l'intérieur de la vis entre l'extérieur et l'intérieur de l'enveloppe de cœur.

Ce procédé de refroidissement des vis nécessite cependant des usinages spéciaux des conformateurs et peut entrainer un affaiblissement mécanique des vis de fixation.

Dans la demande de brevet EP-A-0 108 020 on a décrit un réacteur nucléaire à rendement amélioré comportant en particulier un cloisonnement massif occupant pratiquement tout le volume de l'espace annulaire compris entre le cœur et l'enveloppe de cœur.

Un tel cloisonnement massif, constitué par exemple par des blocs en acier inoxydable, permet de jouer le rôle de réflecteur pour les neutrons rapides, en plus des fonctions habituelles de cloisonnements constitués par des plaques métalliques assemblées.

De plus, ce cloisonnement massif permet de protéger la cuve contre un bombardement neutronique trop intense et de diminuer de façon très importante la quantité d'eau dans l'espace compris entre le cœur et l'enveloppe de cœur. On améliore ainsi la tenue du cloisonnement en cas d'accident entrainant une déperdition de l'eau sous pression de refroidissement.

On a décrit par ailleurs, dans la demande EP-A-0 059 130, un cloisonnement massif constitué par des blocs modulaires empilés les uns sur les autres suivant la hauteur du cœur et solidarisés par des tirants de grande longueur disposés verticalement. Le refroidissement des blocs modulaires est assuré par des canaux verticaux traversant chacun des blocs et situés dans le prolongement les uns des autres. Des clavettes engagées dans des rainures sur les faces latérales des blocs venant en contact permettent de réaliser leur assemblage avant de compléter la fixation par les tirants sur lesquels on fixe des écrous en partie haute du cœur.

Ce cloisonnement n'est donc pas fixé sur l'enveloppe de cœur, ce qui présente des inconvénients liés au fait que la position du cloisonnement n'est pas parfaitement définie par rapport à l'enveloppe. D'autre part, on est conduit à percer un grand nombre de canaux de refroidissement pour limiter les contraintes et les déformations d'origine thermique, ce qui diminue fortement le pouvoir réflecteur du cloisonnement. En effet, si le refroidissement est insuffisant, d'une part l'empilement des blocs modulaires va prendre une flèche thermique d'ensemble qui nécessite de prévoir un jeu important entre les blocs et le cœur, ce qui conduit à sous-alimenter les assemblages périphériques et à maintenir le cœur de façon moins efficace, en cas de séisme, d'autre part les tirants de grande longueur sont soumis à des contraintes importantes lors du fonctionnement du réacteur et risquent de se rompre et de se détacher du cloisonnement.

L'ensemble est par ailleurs relativement complexe et nécessite l'usinage de blocs massifs qui doivent être ajustés parfaitement les uns par rapport aux autres.

Enfin, il n'est pas possible d'utiliser, pour des blocs massifs, le mode de fixation sur l'enveloppe de cœur préconisé pour des conformateurs constitués par des plaques d'épaisseur relativement faible. En effet, pour le refroidissement des vis, ces dispositifs nécessitent que des trous soient prévus pour mettre en communication l'alésage de passage des vis dans les conformateurs avec une partie de l'espace annulaire rempli d'eau de refroidissement. D'autres dispositifs de cloisonnement de cœur sont envisageables. On peut mentionner à titre indicatif, le document US-A-3 124 514 qui décrit, pour un réacteur graphite-gaz, un dispositif mobile de blocs en graphite dont certains sont munis de butoirs. Les solutions données excluant plus qu'elles résuggèrent des solutions pour les réacteurs à eau sous pression.

Le but de l'invention est donc de proposer un réacteur nucléaire à eau sous pression selon la revendication 1.

Afin de bien faire comprendre l'invention, on va maintenant décrire à titre d'exemple non limitatif, plusieurs modes de réalisation d'un dispositif de cloisonnement suivant l'invention.

La figure 1 représente, dans une vue en coupe par un plan horizontal, une partie d'un cloisonnement massif modulaire suivant l'invention.

La figure 2 est une coupe suivant BB de la figure 1.

La figure 3 est une vue agrandie d'une vis de fixation du cloisonnement représenté à la figure 1 sur l'enveloppe de cœur.

La figure 4 est une vue suivant CC de la figure 3.

La figure 5 est une vue en coupe par un plan horizontal d'une partie d'un cloisonnement massif suivant l'invention et selon un second mode de réalisation.

La figure 6 est une vue en coupe par un plan horizontal d'une partie d'un cloisonnement massif, suivant l'invention et suivant un troisième mode de réalisation.

La figure 7 est une vue suivant AA de la figure 6.

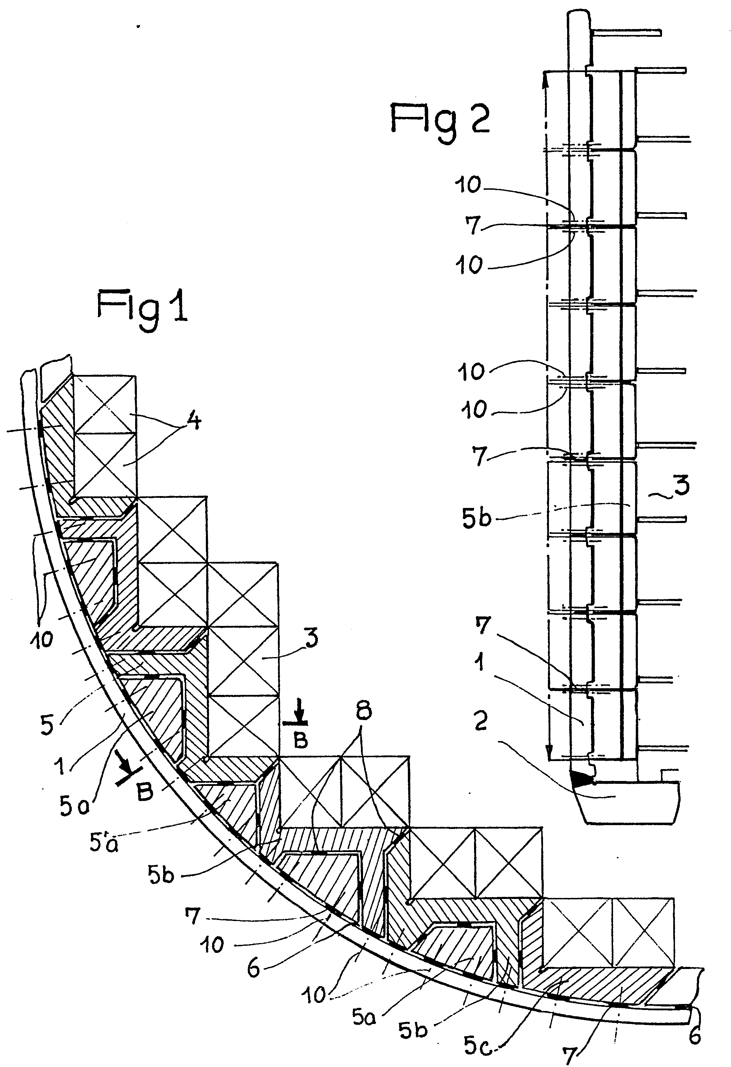

Sur les figures 1 et 2, on voit l'enveloppe de cœur 1 d'un réacteur nucléaire à eau pressurisée fixée par soudage à sa partie inférieure sur la plaque support de cœur 2 sur laquelle reposent les assemblages constituant le cœur 3 du réacteur. L'enveloppe de cœur 1 est fixée, à sa partie supérieure, sur la bride de la cuve du réacteur et disposée coaxialement à la cuve. L'enveloppe de cœur 1 et la plaque support 2 font partie des équipements internes inférieurs du réacteur.

On voit sur la figure 1 que la surface extérieure du cœur 3 venant en apui sur le cloisonnement 5 présente une forme complexe comportant de nombreux redans correspondant aux assemblages périphériques 4 du réacteur.

Le cloisonnement 5 qui occupe pratiquement tout le volume de l'espace annulaire entre la surface extérieure du cœur et la surface intérieure de l'enveloppe 1 est constitué par trois types d'élément modulaire 5a, 5b et 5c de formes différentes. Tous ces blocs modulaires ont même hauteur et le cloisonnement est constitué par des couches successives d'éléments modulaires 5a, 5b et 5c disposés de façon non jointive les unes au-dessus des autres suivant la hauteur du cœur. On voit sur la figure 2 que l'ensemble du cloisonnement est constitué par neuf couches d'élément modulaires tels que représentés sur la figure 1 disposées les unes au-dessus des autres. On voit également sur la figure 1 que les éléments 5a ne sont pas tous identiques entre eux et qu'il en est de même pour les éléments 5b et 5c qui sont conçus pour épouser la forme extérieure du cœur.

Les éléments 5a, 5b et 5c sont disposés le long de la surface interne de l'enveloppe de façon non jointive par rapport à cette enveloppe, des cales 7 étant disposées entre les éléments modulaires et la surface interne de l'enveloppe 1. Ces cales 7 permettent de ménager un espace 6 pour la circulation de l'eau de refroidissement du réacteur entre le cloisonnement 5 et l'enveloppe 1.

Entre les éléments modulaires 5a et 5b et entre les éléments 5b et 5c sont également disposés des cales 8 permettant de maintenir à chaud un certain écartement entre les blocs modulaires pour la circulation d'eau de refroidissement du réacteur.

A froid, il existe un petit jeu entre les cales 8 qui sont solidaires d'un des éléments modulaires (par exemple 5a) et la face en vis à vis de l'autre élément modulaire (par exemple 5b) qui permet aux éléments 5a et 5b de se dilater librement, dans la limite autorisée par le jeu, ce qui diminue les contraintes thermiques.

On réalise également ainsi un refroidissement correct des blocs modulaires sans avoir à usiner des canaux de refroidissement et en n'introduisant ainsi qu'une faible quantité d'eau dans le cloisonnement qui n'altère pas le pouvoir de réflexion.

La faible taille des blocs modulaires limite enfin leur déformation thermique, ce qui permet de bien maîtriser les problèmes relatifs à la géométrie du cloisonnement et évite de prévoir un jeu trop important entre les blocs et le cœur qui serait préjudiciable pour assurer le maintien du cœur en cas de séisme et risquerait de conduire à sous-alimenter en fluide de refroidissement les assemblages périphériques.

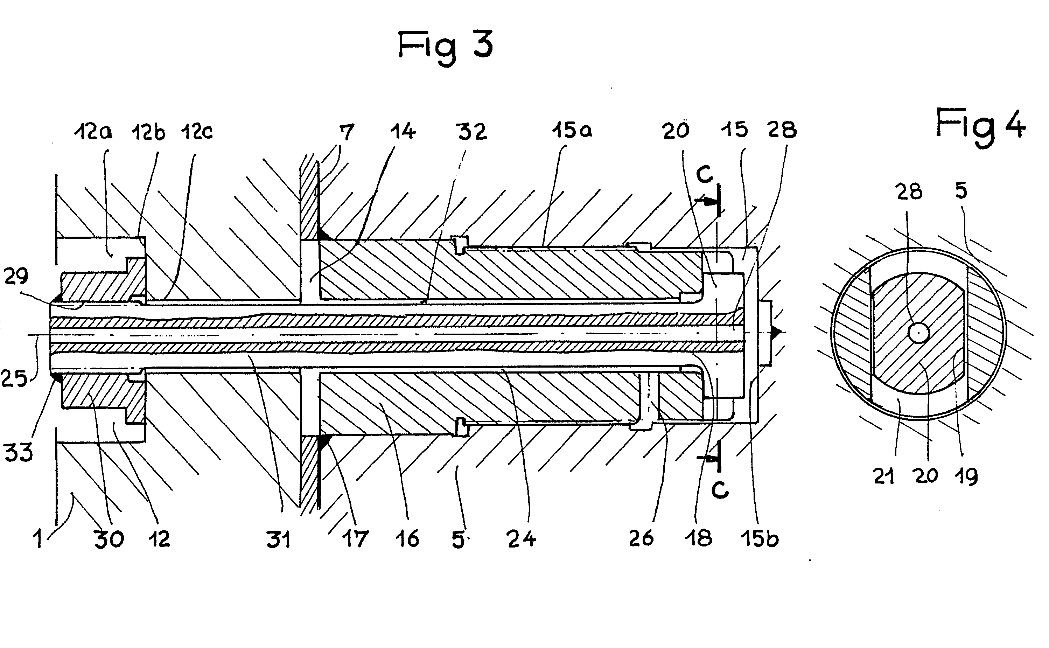

Les blocs modulaires 5a, 5b et 5c sont reliés à l'enveloppe de cœur 1 par l'intermédiaire de dispositifs de fixation 10 qui seront décrits en détail en se référant aux figures 3 et 4.

Les blocs 5a sont reliés à l'enveloppe de cœur par quatre dispositifs 10 disposés, pour deux d'entre eux, à la partie supérieure du bloc et pour deux d'entre eux à la partie inférieure. Les dispositifs de fixation sont placés au niveau des cales 7. Le bloc central 5'a cependant n'est fixé sur l'enveloppe de cœur que par deux dispositifs 10 placés, l'un à sa partie supérieure, l'autre à sa partie inférieure.

Les éléments modulaires 5b, de forme profilée, sont reliés à l'enveloppe de cœur 1 par quatre vis disposées deux à deux de part et d'autre du bloc 5a, le bloc 5b entourant le bloc 5a vers l'intérieur venant en appui sur l'enveloppe de cœur de part et d'autre de ce bloc 5a.

Les blocs 5c sont également fixés sur l'enveloppe de cœur par un ensemble de quatre dispositifs 10.

Sur la figure 3, on voit l'enveloppe de cœur 1 traversée par un alésage 12 comportant une partie à grand diamètre 12a vers l'extérieur de l'enveloppe de cœur se terminant par une surface d'appui 12b et une partie à faible diamètre 12c. L'élément modulaire de cloisonnement 5 relié à l'enveloppe de cœur 1 vient en appui sur celle-ci par l'intermédiaire de la cale d'appui 7 comportant une rainure de passage d'eau 14 en communication avec l'espace 6 permettant la circulation de l'eau de refroidissement du réacteur entre l'enveloppe de cœur et les blocs modulaires. Ce bloc modulaire 5 est percé d'un trou borgne 15 taraudé sur une partie 15a de sa surface intérieure. Un manchon 16 fileté est fixé par vissage à l'intérieur du trou borgne 15 puis bloqué en rotation par rapport à l'élément 5 par une soudure circulaire 17.

Avant de fixer le manchon dans le trou borgne du bloc modulaire 5, on équipe ce manchon d'une vis 18 dont la tête 20 présentant deux méplats 19, visibles à la figure 4, est engagée dans un logement 21 usiné dans l'extrémité du manchon 16.

Le manchon 16 a une longueur inférieure à la longueur du trou borgne 15, si bien qu'un espace est ménagé entre l'extrémité du manchon dans lequel est usiné le logement 21 et le fond 15b du trou borne 15. L'extrémité du manchon 16 est évidée sur une largeur correspondant à la largeur de la tête de vis 20 entre les deux méplats 19 pour ménager le logement 21. La tête de vis 20 peut ainsi être bloquée en rotation lorsqu'elle est engagée dans le logement 21 (figure 4).

L'alésage central 24 du manchon 16 a un diamètre sensiblement égal au diamètre de la partie 12c de l'alésage traversant l'enveloppe de cœur 1 et lorsque le bloc modulaire est mis en position de fixation le long de l'enveloppe de cœur, l'alésage 12 et le manchon 16 ou son alésage central 24, ont leur axe 25 commun.

Le diamètre de l'alésage 24 et celui de l'alésage 12c sont légèrement supérieurs à celui de la partie non filetée de la vis 18 afin que celle-ci soit sollicitée en flexion et non en cisaillement, ce qui améliore très sensiblement son comportement en fatigue. Cette conception permet, pour un encombrement de vis donné, de réduire au maximum la longueur du filetage et par suite, de rendre maximale sa longueur de flexion, d'où un bon comportement en fatigue qui est essentiel puisque les vis doivent accomoder les déplacements des blocs résultant des transitoires de température.

Le manchon 16 est percé d'un trou radial 26 le traversant sur toute son épaisseur. Entre ce trou 26 et l'extrémité du manchon située vers le fond du trou borgne 15b, le manchon a un diamètre inférieur du diamètre du trou borgne 15 si bien qu'un espace annulaire met en communication l'entrée du trou radial 26 sur la surface externe du manchon avec l'espace ménagé entre le fond du trou borgne 15b et l'extrémité du manchon comportant le logement 21.

La vis 18 comporte un perçage axial 28 sur toute sa longueur débouchant, lorsque la vis est en place dans le manchon, dans l'espace terminal du trou borgne 15. A son autre extrémité, le perçage central 28 débouche à l'extérieur de l'enveloppe de cœur 1, la vis étant engagée dans l'alésage 12 traversant l'enveloppe de cœur de façon que son extrémité opposée à la tête 20 comportant un filetage 29 soit à l'intérieur de la partie 12a à grand diamètre de l'alésage en communication avec la partie extérieure de l'enveloppe. Sur cette partie filetée 29 est engagé un écrou 30 venant en appui sur la surface externe de l'enveloppe, au niveau de la surface d'appui 12b.

Entre sa partie filetée 29 et sa tête 20, la vis comporte un corps tubulaire 31 dont le diamètre est inférieur au diamètre intérieur de la partie 12c de l'alésage 12 et de l'alésage central 24 du manchon 16. Un canal annulaire 32 est donc ménagé autour de la vis sur toute sa traversée du manchon 16 à l'intérieur du bloc 5 et de l'enveloppe 1.

Pour sa mise en place, le bloc 5 est amené en position en face de la cale d'appui 7 fixée sur la surface interne de l'enveloppe de cœur, ce bloc 5 étant équipé du manchon 16 et de la vis 18 qui est alors engagée dans l'alésage 12 traversant l'enveloppe jusqu'au moment où la partie 29 de cette vis se trouve à l'extérieur de l'enveloppe 1. L'écrou 30 est alors vissé sur la partie 29 pour assurer le serrage et la fixation du bloc 5 contre la cale 7. Ce serrage peut être réalisé puisque la vis 18 est bloquée en rotation par sa tête 20 comportant des méplats 19, dans le logement 21.

On opère de la même façon pour les quatre vis appartenant aux quatre dispositifs de fixation 10 du bloc 5.

Lorsque le serrage a été effectué, on bloque l'écrou en rotation par une soudure 33.

Lorsque le réacteur nucléaire est en fonctionnement, il existe une différence de pression entre l'eau de refroidissement se trouvant à l'extérieur de l'enveloppe et l'eau de refroidissement se trouvant à l'intérieur de l'enveloppe.

En effet, l'eau refroidie par les générateurs de vapeur qui est renvoyée à la base du cœur par l'espace existant entre l'enveloppe de cœur 1 et la cuve subit une perte de charge en traversant le cœur qui est lui-même sensiblement en équilibre de pression à une hauteur donnée avec l'espace de circulation 6 de l'eau de refroidissement entre l'enveloppe de cœur et les blocs 5.

Il existe donc une différence de pression entre l'extérieur de l'enveloppe de cœur et la rainure de passage d'eau 14 en communication avec l'espace de circulation d'eau 32. Il s'établit donc une circulation d'eau de refroidissement entre l'extérieur et l'intérieur de l'enveloppe de cœur par le perçage 28 de la vis, l'espace terminal du trou borgne 15, l'espace annulaire entre l'extrémité du manchon 16 et le fond du trou borgne 15b, le trou radial 26, le canal annulaire 32 et enfin la rainure de passage d'eau 14.

Cette circulation continue d'eau à l'intérieur de la vis et autour de celle-ci permet d'éviter des gradients thermiques dans la vis et réalise un certain refroidissement de celle-ci.

Cette circulation est obtenue sans avoir à percer les blocs modulaires du cloisonnement et sans avoir à percer la vis dans la direction radiale.

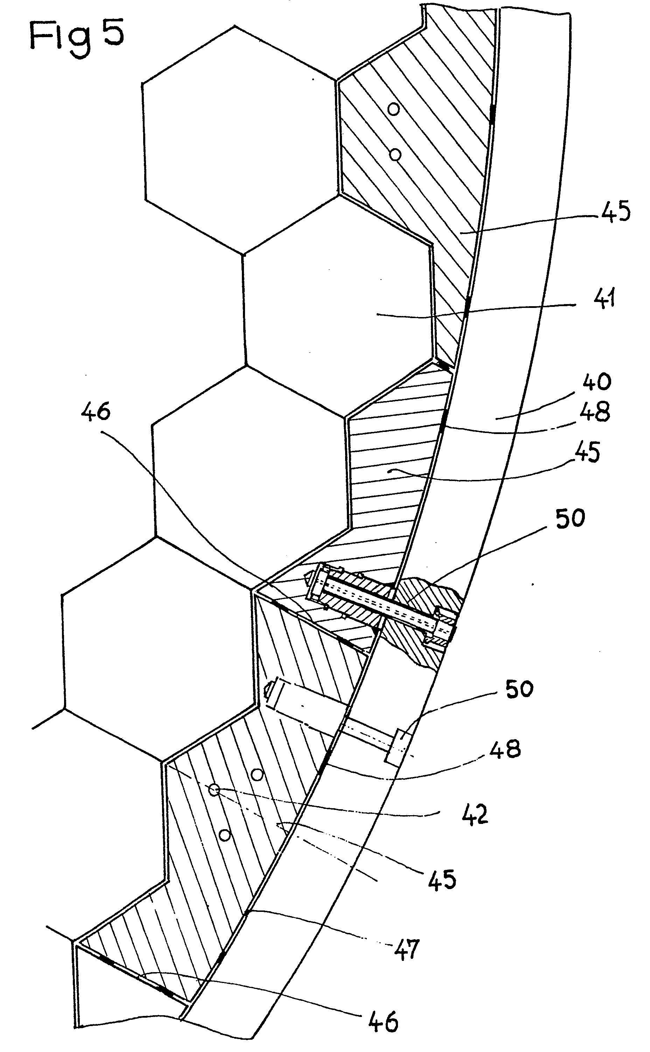

Sur la figure 5, on voit un second type de cloisonnement massif fixé sur l'enveloppe de cœur 40 par des dispositifs de fixation 50 identiques au dispositif de fixation représenté sur les figures 3 et 4. Ce cloisonnement massif comportant des blocs modulaires 45 est utilisable dans le cas d'un réacteur nucléaire à eau pressurisée de type sous-modéré dont les assemblages 41 ont une section hexagonale (au lieu d'une section carrée comme pour le réacteur représenté à la figure 1).

Les différents blocs modulaires 45 sont disposés les uns à la suite des autres sur la périphérie du cœur sans chevauchement. Certains de ces blocs sont percés de quelques trous de refroidissement verticaux 42 sur toute leur hauteur. Le nombre de trous de refroidissement est ici faible, car les réacteurs sous-modérés sont entourés d'une couverture de matériau fertile disposée entre le cœur et le cloisonnement qui diminue l'échauffement dû à l'effet du rayonnement sur les blocs modulaires.

Comme dans le cas du cloisonnement représenté aux figures 1 et 2, l'ensemble du cloisonnement est constitué par la juxtaposition de couches de blocs tel que représenté à la figure 5 disposées non jointives les unes au-dessus des autres. Entre deux blocs 45 successifs et entre un bloc 45 quelconque et l'enveloppe de cœur 40 sont disposées des cales 48 permettant de ménager un espace de circulation d'eau de refroidissement 46 ou 47.

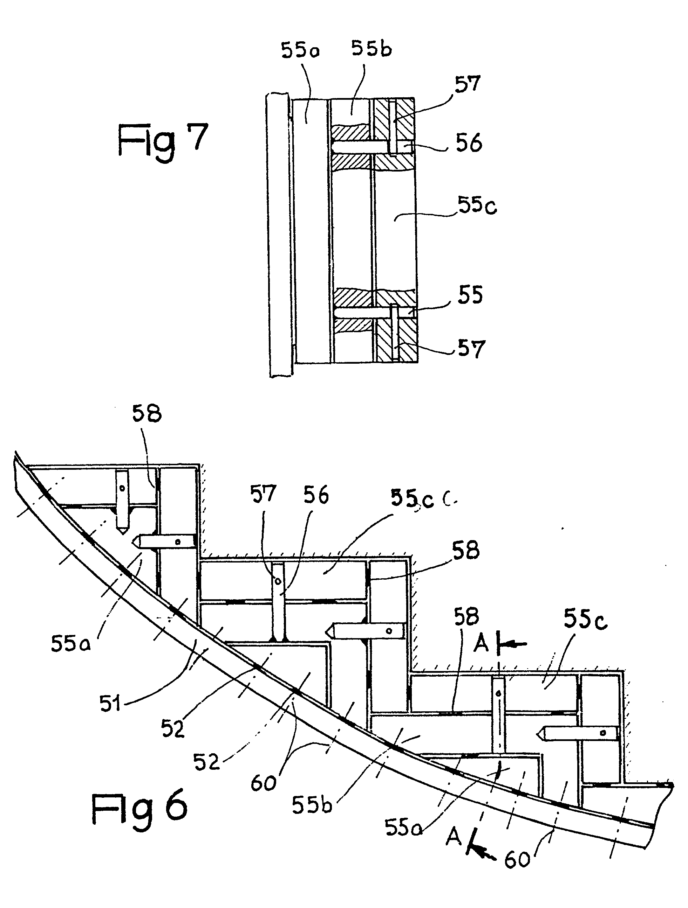

Sur les figures 6 et 7, on voit un troisième type de cloisonnement utilisable dans le cas d'un cœur constitué par des assemblages à section carrée comme représenté sur la figure 1.

Ce cloisonnement comporte des blocs modulaires 55a et 55b fixés sur l'enveloppe de cœur 51 par des dispositifs de fixation 60 identiques aux dispositifs décrits en se référant aux figures 3 et 4.

Les blocs modulaires 55b sont disposés de façon à chevaucher les blocs 55a et les blocs 55a et 55b sont fixés le long de l'enveloppe 51 de façon non jointive grâce à des cales 52.

Sur certains blocs modulaires 55a ou 55b sont fixés des clavettes 56 soudées sur le bloc modulaire correspondant et le traversant sur toute son épaisseur. Ces clavettes 56 permettent la fixation d'un troisième type de bloc modulaire 55c sur les blocs modulaires 55a ou 55b par l'intermédiaire de goupilles 57.

Les blocs modulaires 55c ne sont pas reliés directement à l'enveloppe de cœur 51 mais uniquement par l'intermédiaire des blocs modulaires 55a ou 55b. Entre les blocs 55a, 55b et 55c sont placées des cales 58 ménageant un espace pour le refroidissement et le déplacement relatif des blocs sous l'effet de la dilatation.

On voit que les principaux avantages du dispositif suivant l'invention sont de permettre un refroidissement et un déplacement relatif des blocs sous l'effet de la dilatation en évitant l'utilisation de nombreux canaux de refroidissement réduisant la masse métallique des blocs modulaires et les rendant impropres à servir de réflecteurs de neutrons. Le type particulier de dispositif de fixation décrit permet un refroidissement et une homogénéisation de la température des vis de fixation des éléments de cloisonnement sur l'enveloppe de cœur, d'une grande efficacité, sans réduire la résistance mécanique des vis.

Ce dispositif de fixation peut être utilisé dans le cas de blocs modulaires massifs constituant un cloisonnement occupant pratiquement tout le volume de l'espace annulaire compris entre le cœur et la surface intérieure de l'enveloppe de cœur.

Les cloisonnements massifs ainsi obtenus sont fixés très solidement sur l'enveloppe de cœur et ont des positions parfaitement définies.

La disposition de ces blocs modulaires pour constituer le cloisonnement permet de réserver des espaces libres pour le passage de l'eau de refroidissement sans avoir à usiner les blocs par perçage.

L'invention ne se limite pas aux modes de réalisation qui ont été décrits.

C'est ainsi que des blocs massifs de formes différentes de celles qui ont été décrites peuvent être utilisées.

Le logement d'extrémité du manchon pour le blocage en rotation de la vis peut être d'une forme quelconque non cylindrique pour permettre le blocage d'une tête de vis de forme correspondante.

Le manchon peut être fixé d'une façon quelconque à l'intérieur du trou borgne ménagé dans l'élément de cloisonnement.

Le dispositif de fixation décrit s'applique non seulement dans le cas d'un cloisonnement réflecteur massif suivant l'invention comportant des blocs modulaires de grande épaisseur mais également dans le cas d'un cloisonnement classique constitué par des plaques métalliques d'épaisseur relativement faible. Dans ce cas, le dispositif de fixation suivant l'invention peut être avantageusement utilisé pour la fixation des conformateurs sur l'enveloppe de cœur.

L'invention s'applique à tout réacteur nucléaire à eau sous pression dont on veut améliorer le bilan neutronique.

## Revendications

1. Réacteur nucléaire à eau sous pression comportant un cœur (3) constitué par des assemblages (4) de forme prismatique disposés côte à côte, à l'intérieur d'une enveloppe de cœur (1) cylindrique à axe vertical entourant le cœur (3) de façon à ménager un espace annulaire entre le cœur (3) et l'enveloppe (1), espace dans lequel est disposé un cloisonnement (5) constitué par des éléments modulaires métalliques ayant la forme de blocs massifs juxtaposés de façon que le cloisonnement occupe pratiquement tout le volume de l'espace annulaire, caractérisé en ce que entre les faces des éléments modulaires (5, 45, 55) placées en vis à vis sont disposées des cales (8, 48, 58) de faible épaisseur par rapport à l'épaisseur moyenne des blocs maintenant un espacement entre les éléments modulaires et permettant leur dilatation et leur refroidissement et en ce que les éléments modulaires ayant une ou plusieurs faces situées en vis à vis de la face interne de l'enveloppe y sont fixés de façon non jointive par des dispositifs à vis (10, 50, 60) refroidis par circulation d'eau, la distance entre les blocs modulaires et l'enveloppe (1) du cœur (3) étant maintenue par des cales (7).

2. Réacteur nucléaire selon la revendication 1, caractérisé en ce que les blocs massifs sont des blocs modulaires profilés (5a, 5b, 5c) emboîtés les uns dans les autres, mais non reliés entre eux, comportant des premiers blocs (5a), des seconds blocs (5b) respectivement arrangés pour être en appui sur l'enveloppe (1) du cœur (3) de part et d'autre de chacun des premiers blocs (5a) et des troisièmes blocs (5c), lesdits deuxièmes blocs (5b) et troisièmes blocs (5c) étant arrangés pour être en contact avec la surface externe du cœur (3) par une de leurs faces respectives, les premiers, deuxièmes et troisièmes blocs profilés (5a, 5b, 5c) étant fixés sur l'enveloppe (1) du cœur (3) respectivement par un ensemble de dispositifs à vis (10), l'espacement entre blocs modulaires et enveloppe du cœur étant ménagé par des cales (7).

3. Réacteur nucléaire selon la revendication 1, caractérisé en ce que les blocs massifs sont des blocs modulaires (45) disposés le long de la surface interne de l'enveloppe (40) du cœur les uns à la suite des autres, sont tous fixés sur l'enveloppe du cœur par un ensemble de dispositifs à vis (50) et remplissent tout le volume de l'espace annulaire délimité entre le cœur (41) et l'enveloppe (40) dudit cœur, à l'exception des espaces de faible largeur (46) réservés entre les blocs (45) et des espaces de faible largeur (47) ménagés par des cales (48) disposées entre chacun des blocs (45) et l'enveloppe (40) du cœur (41).

4. Réacteur nucléaire selon la revendication 3, caractérisé en ce que les blocs modulaires (45) comportent, pour une partie d'entre-eux seulement, des trous (42) pour la circulation de l'eau de refroidissement du réacteur.

5. Réacteur nucléaire selon la revendication 1, caractérisé en ce qu'une partie des blocs modulaires (55a, 55b) est reliée à l'enveloppe (51) du cœur par des dispositifs à vis (60) et que les autres blocs (55c) sont reliés chacun à un bloc modulaire (55a ou 55b) lui-même relié à l'enveloppe (51) du cœur, respectivement par l'intermédiaire d'une clavette (56) fixée par soudage sur le bloc (55a ou 55b).

6. Réacteur nucléaire selon l'une quelconque des revendications précédentes, caractérisé en ce que chacun des dispositifs à vis (10, 50, 60) pour la fixation des blocs modulaires sur l'enveloppe (1) du cœur (3) comporte:

– un manchon (16) fixé à l'intérieur d'un trou borgne (15) usiné dans le bloc modulaire (5) dont l'axe est dans le prolongement de l'axe d'un alésage (12) traversant l'enveloppe (1) de cœur (3), comportant un alésage central (24) d'un diamètre sensiblement égal au diamètre de l'alésage (12) traversant l'enveloppe (1) de cœur (3), un logement (21) non cylindrique dans lequel débouche l'alésage central (24), à son extrémité disposée au voisinage du fond du trou borgne (15), le manchon (16) ménageant un espace par rapport à ce fond (15b) et au moins un trou radial (26) traversant sa paroi latérale sur toute son épaisseur,

– et une vis (18) présentant un perçage (28) de direction axiale sur toute sa longueur et comportant un corps tubulaire (31) d'un diamètre extérieur légèrement inférieur au diamètre de l'alésage (12) de l'enveloppe (1) de cœur (3) et de l'alésage central (24) du manchon (16), une tête (20) de forme complémentaire de la forme du logement (21) usiné dans l'extrémité du manchon (16) dans lequel elle est engagée et une partie filetée (29) munie d'un écrou de serrage (30).

– la vis (18) engagée dans l'alésage central (24) du manchon (16) et dans l'alésage (12) de l'enveloppe de cœur étant en appui, sur le manchon (16) par sa tête (20) et sur la surface externe de l'enveloppe (1) de cœur (3), par l'intermédiaire de l'écrou (30) engagé sur sa partie filetée (29),

– et l'espace ménagé entre le fond (15b) du trou borgne et l'extrémité du manchon (16) communiquant avec l'entrée du trou radial (26) situé sur la surface externe du manchon (16) si bien qu'une circulation d'eau peut s'établir en fonctionnement entre l'extérieur et l'intérieur de l'enveloppe (1) de cœur (3), par le perçage axial (28) de la vis (18), l'espace terminal du trou borgne (15), le trou radial (26) du manchon (16) et enfin l'espace (32) entre la vis (18) et l'alésage central (24) du manchon (16) communiquant avec l'espace (6) ménagé entre l'enveloppe de cœur (1) et le bloc modulaire (5).

7. Réacteur nucléaire selon la revendication 6, caractérisé par le fait que le manchon (16) est fileté extérieurement pour sa fixation par vissage sur une partie taraudée du trou borgne (15), le manchon (16) étant de plus bloqué en rotation par une soudure (17).

## Claims

1. Pressurized water nuclear reactor having a core (3) consisting of assemblies (4) of prismatic shape arranged side-by-side inside a cylindrical core casing (1) with a vertical axis, so as to create an annular space between the core (3) and the casing (1), in which a lining (5) is arranged, the lining consisting of modular metallic elements of solid block shape juxtaposed so that the modular lining occupies virtually all the volume of the annular space, characterized in that, between the confronting faces of the modular elements (5, 45, 55), there are packing pieces (8, 48, 58) of small thickness as compared with the average thickness of the blocks, maintaining a gap between the modular elements, for their expansion and their cooling, and in that the modular elements, which have one or more faces which confront the internal surface of the casing are fixed thereto without contact by screw devices (10, 50, 60) cooled by a water flow, the distance between the modular blocks and the casing (1) of the core being maintained by packing pieces (7).

2. Nuclear reactor according to claim 1, characterized in that the massive solid blocks are profiled modular blocks (5a, b, 5c) fitting into one another but not mutually connected, comprising first blocks (5a), second blocks (5b) respectively arranged for having a bearing contact with the casing (1) of the core (3) on both sides of each of the first blocks (5a) and third blocks (5c), said second blocks (5b) and third blocks (5c) being arranged for contact with the external surface of the core (3) through one of their respective surfaces, the first, second and third profiled blocs (5a, 5b, 5c) being fixed onto the casing (1) of the core (3) respectively by a set of screw devices (10), the amount of spacing between the modular blocks and the casing of the core being provided by packing pieces (7).

3. Nuclear reactor according to claim 1, characterized in that the solid blocks are modular blocks (45) arranged in succession along the inner surface of the core casing (40), are all fixed to the core casing (40) by a set of screw devices (50), and fill all the volume of the annular space between the core (41) and the casing (40) of the core, with the exception of narrow spaces (46) reserved between the modular blocks (45) and narrow spaces (47) created by packing pieces (48) located between each of the modular blocks (45) and the core casing (40).

4. Nuclear reactor according to claim 3, characterized in that the modular blocks (45) comprise, for some only of them, holes (42) for circulation of the reactor cooling water.

5. Nuclear reactor according to claim 1, characterized in that some of the modular blocks (55a, 55b) are joined to the core casing (51) by screw devices (60), while the other modular blocks (55c) are each joined to a modular block (55a or 55b), which is joined to the core casing (51), via a key (56) welded to the block (55a or 55b).

6. Nuclear reactor according to any one of the preceding claims, characterized in that each of the screw devices (10, 50, 60) for fixing the modular blocks to the core casing (1) comprises:
– a sleeve (16) fixed inside a blind hole (15) machined in the modular block (5), the axis of which is in the extension of the axis of a bore (12) passing through the casing (1) of the core (3) formed with a central bore (24) whose diameter is substantially equal to the diameter of the bore (12) passing through the casing (1) of the core (3), and a non-cylindrical housing (21) into which the central bore (24) opens at its end located in the region of the bottom of the blind hole (15), the sleeve (16) defining a space with said bottom (15b), and at least one radial hole (26) passing throughout its lateral wall, and
– a screw (18) having an axially directed hole (28) over its entire length and comprising a tubular body (31), the external diameter of which is slightly less than the diameter of the bore (12) of the casing (1) of the core (3) and of the central bore (24) of the sleeve (16), a head (20) the shape of which matches the shape of the housing (21) machined in the end of the sleeve (16) in which it is inserted, and a threaded part (29) provided with a tightening nut (30),
– the screw (18) inserted in the central bore (24) of the sleeve (16) and in the bore (12) of the core casing bearing against the sleeve (16) via its head (20) and against the outer surface of the casing (1) of the core (3) via the nut (30) fitted to its threaded part (29),
– and the space created between the bottom (15b) of the blind hole and the end of the sleeve (16) communicating with the entrance of the radial hole (26) located on the outer surface of the sleeve (16), with the result that water circulation can establish, during operation, between the outside and the inside of the casing (1) of the core (3) through the axial hole (28) in the screw (18), the terminal space in blind hole (15), the radial hole (26) in the sleeve (16) and, finally, the space (32) between the screw (18) and the central bore (24) of the sleeve (16) communicating with the space (6) created between the core casing (1) and the modular block (5).

7. Nuclear reactor according to claim 6, characterized in that the sleeve (16) is externally threaded so that it can be screwed into an internally threaded part of the blind hole (15), the sleeve (16) being further locked against rotation by a weld (17).

## Patentansprüche

1. Druckwasser-Kernreaktor mit einem Kern (3), der durch Brennstoffbündel (4) mit prismatischer Form gebildet ist, die nebeneinander im Inneren eines zylindrischen Kernmantels (1) mit vertikaler Achse angeordnet sind, welcher den Kern (3) derart umgibt, dass zwischen dem Kern (3) und dem Mantel (1) ein Ringraum verbleibt, in welchem eine Auskleidung (5) angeordnet ist, die durch metallische Modulelemente in Form von massiven Blöcken gebildet ist, welche derart nebeneinander angeordnet sind, dass die Auskleidung praktisch das gesamte Volumen des Ringraumes einnimmt, dadurch gekennzeichnet, dass zwischen den Seiten der einander gegenüberliegenden Modulelemente (5, 45, 55) Zwischenlagen (8, 48, 58) mit geringer Dicke, bezogen auf die mittlere Dicke der Blöcke angeordnet sind, die einen Zwischenraum zwischen den Modulelementen aufrechterhalten und ihre Ausdehnung sowie ihre Abkühlung ermöglichen, und dass die Modulelemente, die mit einer oder mehreren Seitenflächen der Innenseite des Mantels gegenüberliegen, an diesem mit Abstand durch Schraubvorrichtungen (10, 50, 60) fixiert sind, welche durch die Zirkulation von Wasser gekühlt sind, wobei der Abstand zwischen den Modulblöcken und dem Mantel (1) des Kernes (3) durch Zwischenlagen (7) aufrechterhalten wird.

2. Kernreaktor nach Anspruch 1, dadurch gekennzeichnet, dass die massiven Blöcke profilierte Modulblöcke (5a, 5b, 5c) sind, die ineinandergeschachtelt, aber nicht miteinander verbunden sind, mit ersten Blöcken (5a), zweiten Blöcken (5b), die so angeordnet sind, dass sie am Mantel (1) des Kernes (3) auf jeder Seite jedes der ersten Blöcke (5a) anliegen, und dritten Blöcken (5c), wobei die zweiten und dritten Blöcke so angeordnet sind, dass sie die Aussenfläche des Kernes mit einer ihrer Seiten berühren, und wobei die ersten, zweiten und dritten profilierten Blöcke (5a, 5b, 5c) am Mantel (1) des Kernes (3) durch eine Anordnung von Schraubvorrichtungen (10) befestigt sind und der Zwischenraum zwischen den Modulblöcken und dem Kernmantel durch die Zwischenlagen (7) aufrecht erhalten wird.

3. Kernreaktor nach Anspruch 1, dadurch gekennzeichnet, dass die massiven Blöcke Modulblöcke (45) sind, die entlang der Innenfläche des Kernmantels (40) aufeinanderfolgend angeordnet sind, wobei sie alle am Kernmantel durch eine Anordnung von Schraubvorrichtungen (50) befestigt sind und das gesamte Volumen des Ringraumes zwischen dem Kern (41) und dem Kernmantel (40) ausfüllen, mit Ausnahme von Räumen (46) geringer Breite, die zwischen den Blöcken (45) freigelassen sind, und Räumen (47) geringer Breite, welche durch Zwischenlagen (48) gebildet sind, die zwischen jedem der Blöcke (45) und dem Mantel (40) des Kernes (41) angeordnet sind.

4. Kernreaktor nach Anspruch 3, dadurch gekennzeichnet, dass ein Teil der Modulblöcke (45) Durchtrittsöffnungen (42) für die Zirkulation von Reaktorkühlwasser aufweisen.

5. Kernreaktor nach Anspruch 1, dadurch gekennzeichnet, dass ein Teil der Modulblöcke (55a, 55b) mit dem Kernmantel (51) durch Schraubvorrichtungen (60) verbunden ist und dass die anderen Blöcke (55c) je mit einem seinerseits mit dem Kernmantel (51) verbundenen Modulblock (55a oder 55b) durch einen Keil (56) verbunden sind, der am Block (55a oder 55b) durch Schweissen befestigt ist.

6. Kernreaktor nach einem der vorhergehenden Ansprüche, dadurch gekennzeichnet, dass jede Schraubvorrichtung (10, 50, 60) zur Befestigung des Modulblockes am Mantel (1) des Kernes (3) aufweist:
– eine Muffe (16), die im Inneren einer im Modulblock (5) ausgebildeten Blindbohrung (15) befestigt ist, deren Achse in der Verlängerung der Achse einer den Kernmantel (1) durchsetzenden Bohrung (12) liegt, wobei die Muffe eine zentrale Bohrung (24), deren Durchmesser im wesentlichen gleich dem Durchmesser der den Mantel (1) des Kernes (3) durchsetzenden Bohrung (12) ist, einen nichtzylindrischen Sitz (21), in welchen die zentrale Bohrung (24) ausmündet, u.zw. an dem nahe dem Boden der Blindbohrung (15) gelegenen Muffenende, wobei die Muffe (16) einen Raum zu diesem Boden (15b) begrenzt, und zumindest eine radiale Durchtrittsöffnung (26) aufweist, welche ihre Seitenwand über deren gesamte Dicke durchsetzt,
– und eine Schraube (18), welche über ihre gesamte Länge eine Axialbohrung (28) und einen rohrförmigen Körper (31), dessen Aussendurchmesser geringfügig kleiner als der Durchmesser der Bohrung (12) des Mangels (1) des Kernes (3) und der zentralen Bohrung (24) der Muffe (16) ist, einen Kopf (20), der zu dem am Ende der Muffe (16) ausgebildeten Sitz (21), in welchen er eingreift, komplementäre Form hat, und einen Gewindeabschnitt (29) aufweist, der mit einer Spannmutter (30) versehen ist, wobei
– die Schraube (18), die in die zentrale Bohrung (24) der Muffe (16) und in die Bohrung (12) des Kernmantels eingreift, an der Muffe (16) mit ihrem Kopf (20) und an der Aussenfläche des Mantels (1) des Kernes (3) mittels der auf ihren Gewindeabschnitt (29) aufgeschraubten Mutter (30) angreift,
– und wobei der Raum zwischen dem Boden (15b) der Blindbohrung und dem Ende der Muffe (16) mit dem an der Aussenfläche der Muffe (16) gelegenen Eingang der radialen Durchtrittsöffnung (26) in Verbindung steht, so dass im Betrieb eine Wasserzirkulation zwischen dem Äusseren und dem Inneren des Mantels (1) des Kernes (3) durch die Axialbohrung (28) der Schraube (18), den Endraum der Blindbohrung (15), die radiale Durchtrittsöffnung (26) der Muffe (16) und schliesslich den Raum (32) zwischen der Schraube (18) und der zentralen Bohrung (24) der Muffe (16) vorhanden ist, die mit dem zwischen dem Kernmantel (1) und dem Modulblock (5) gebildeten Raum (6) in Verbindung steht.

7. Kernreaktor nach Anspruch 6, dadurch gekennzeichnet, dass die Muffe (16) ein Aussengewinde zu ihrer Befestigung durch Verschrauben mit einem Gewindeabschnitt der Blindbohrung (15) aufweist, wobei die Muffe (16) ausserdem durch eine Schweissstelle (17) gegen Drehung blockiert ist.

0 117 168

# Fig 2

# Fig 1

# Fig 3

# Fig 4

0 117 168

Fig 5

Fig 7

Fig 6